# FASCICULE DE BREVET EUROPEEN

(11) **EP 0 535 063 B1**
(45) Date de publication et mention de la délivrance du brevet: **09.10.1996**
(21) Numéro de dépôt: 91911308.4
(22) Date de dépôt: 10.06.1991
(51) Int. Cl.: B01D 19/00, B01D 1/22, C02F 1/20, C02F 1/08

(54) **PROCEDE DE DEGAZAGE D'UN LIQUIDE DE COUPLAGE D'UN APPAREIL DE GENERATION D'ONDES DE PRESSION A LIQUIDE DE COUPLAGE PAR VOIE CHIMIQUE**
VERFAHREN ZUR CHEMISCHEN ENTGASUNG EINER KUPPLUNGSFLÜSSIGKEIT EINES GERÄTES ZUR ERZEUGUNG VON DRUCKWELLEN MITTELS KUPPLUNGSFLÜSSIGKEITEN
METHOD FOR DEGASSING A COUPLING LIQUID FOR A PRESSURE WAVE GENERATOR USING A COUPLING LIQUID BY CHEMICAL PROCESS

(30) Priorité: 19.06.1990 FR 9007676
(43) Date de publication de la demande: 07.04.1993
(73) Titulaire: TECHNOMED MEDICAL SYSTEMS, 69120 Vaulx-en-Velin (FR)
(72) Inventeur: BOURLION, Maurice, F-42400 S.-Chamond (FR); DANCER, Paul, F-42100 S.-Etienne (FR)
(74) Mandataire: Portal, Gérard
(86) Numéro de dépôt international: FR9100459
(87) Numéro de publication internationale: WO9119553

(56) Documents cités:
- EP-A- 0 090 138
- EP-A- 0 443 379
- GB-A- 2 223 960
- US-A- 2 559 227
- US-A- 4 348 289
- PATENT ABSTRACTS OF JAPAN vol. 7, no. 83 (C-160)6 Avril 1983 & JP-A-56 108 966 (EBARA INFILCO K.K. ) 21 Janvier 1983 voir le document en entier

## Description

L'invention concerne essentiellement un procédé de dégazage d'un liquide de couplage d'un appareil de génération d'ondes de pression à liquide de couplage par voie chimique, un liquide de couplage ainsi traité et un générateur d'ondes de choc utilisant un tel liquide de couplage.

La génération d'ondes de pression est connue depuis le document US Rieber 2 559 227 par décharge électrique entre deux électrodes disposées au premier foyer d'un ellipsoïde tronqué de façon à détruire une cible disposée au second foyer de l'ellipsoïde. L'onde de pression est créée par l'arc électrique généré entre les électrodes qui vaporise brutalement une partie du liquide, ce qui provoque la formation de bulles dans le liquide de couplage dans lequel les électrodes sont immergées. Ce liquide est en particulier constitué par de l'eau. En outre, les gaz qui sont dissous dans le liquide sont par exemple de l'azote, de l'oxygène, du gaz carbonique, en particulier lorsqu'il s'agit de l'eau. Egalement, une faible partie d'eau est également dissociée électrolytiquement.

Or, pour que la transmission des ondes de pression ait lieu de manière optimale, il est nécessaire que le liquide de couplage transmettant les ondes de pression soit dépourvu de bulles de gaz.

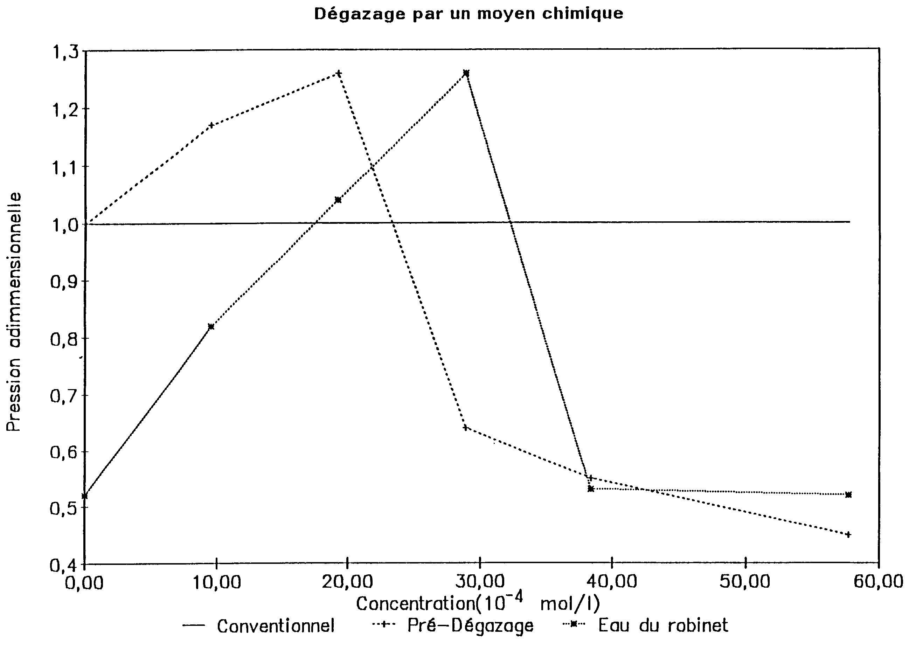

Dans le document US-A-4 530 358, on a proposé de faire circuler le liquide de couplage entre la chambre de génération d'ondes de pression et un circuit de recyclage dans lequel au moins un dispositif d'élimination des bulles de gaz est prévu. L'un de ces moyens consiste en particulier en un moyen d'application de vide pour réaliser le dégazage (colonne 2, lignes 43-45). Il est également prévu d'incliner la chambre de génération et de focalisation des ondes de pression (colonne 2, lignes 46-53). Dans un mode de réalisation objet de la figure 2 de US-4 530 458, le liquide communique librement avec l'atmosphère et, dans ce cas, il est prévu un moyen de déflexion deviant les bulles de gaz de la zone du corps d'un patient devant recevoir les ondes de pression.

Il est aisément concevable que ces moyens utilisés sont compliqués et fort coûteux, tandis que l'emploi d'un dispositif de déflexion interposé dans le trajet des ondes de pression n'est pas réalisable en pratique, car cet élément de déflexion constitue un obstacle physique interrompant le passage des ondes de pression.

Le document EP-A-0 336 220 décrit également une solution technique très compliquée et fort coûteuse de dégazage physique d'un liquide de couplage d'un appareil de génération d'ondes de pression, notamment en référence à la colonne 6, ligne 20 à colonne 7, ligne 46.

Encore, le document EP-A-0 322 473 décrit un dispositif complexe et coûteux de dégazage physique d'un liquide de couplage d'un générateur d'ondes de pression.

Egalement, le document EP-A-0 443 379, publié postérieurement, décrit un dégazage physique d'un liquide de couplage avec un traitement chimique de désinfection évitant la croissance d'algues dans le liquide de couplage. Le dégazage physique est décrit en particulier à la colonne 6, ligne 22 à colonne 9, ligne 37.

La présente invention a donc pour but de résoudre le nouveau problème technique consistant en la fourniture d'une solution permettant de réaliser un dégazage simple et efficace d'un liquide de couplage d'un appareil de génération d'ondes de pression, d'une sûreté et d'une reproductibilité pratiquement parfaites.

Ce nouveau problème technique est résolu pour la première fois par la présente invention de manière simple, fiable, peu coûteuse, donc utilisable à l'échelle industrielle.

Ainsi, selon un premier aspect, la présente invention fournit un procédé de dégazage d'un liquide de couplage présent dans un appareil de génération d'ondes de pression à liquide de couplage, caractérisé en ce qu'il comprend l'addition audit liquide de couplage d'au moins une substance chimique avide de gaz en une quantité suffisante pour absorber ou éliminer sensiblement complètement ledit gaz.

Selon un mode de réalisation avantageux du procédé selon l'invention, on réalise une désoxygénation du liquide de couplage précité par l'emploi d'une substance chimique qui est avide d'oxygène, en une quantité suffisante pour éliminer sensiblement complètement l'oxygène dudit liquide de couplage.

Selon un mode de réalisation préféré du procédé selon l'invention, la substance chimique précitée comprend un sulfite, en particulier un sulfite de métal alcalin ou alcalino-terreux.

Selon un mode de réalisation encore préféré, on utilise comme substance chimique précitée un bisulfite de sodium ou de potassium.

Selon encore un autre mode de réalisation préféré de l'invention, le liquide de couplage est constitué par une solution aqueuse, par exemple de l'eau.

Selon encore un autre mode de réalisation avantageux, la concentration en substance chimique précitée avide de gaz est comprise entre 5.10⁻⁴ et 100.10⁻⁴ mol/l.

Selon un deuxième aspect, la présente invention fournit aussi l'utilisation d'un liquide de couplage dans un appareil de génération d'ondes de pression à liquide de couplage, pour la transmission d'ondes de pression, caractérisée en ce que ledit liquide de couplage comprend au moins une substance chimique avide de gaz en une quantité efficace pour absorber sensiblement complètement un gaz présent ou généré dans ledit liquide.

Selon un mode de réalisation avantageux, cette substance chimique avide de gaz est telle que définie précédemment pour le procédé.

Egalement, selon un troisième aspect, la présente invention fournit un générateur d'ondes de pression à liquide de couplage, caractérisé en ce que ledit liquide de couplage est tel qu'obtenu par le procédé précédemment défini ou est constitué par celui précédemment énoncé, en particulier en étant sensiblement complètement dégazé ou exempt d'oxygène par addition audit liquide de couplage d'une quantité efficace d'au moins une substance chimique avide de gaz ou avide d'oxygène.

Selon un mode de réalisation préféré, le générateur d'ondes de pression comprend un ellipsoïde tronqué rempli dudit liquide de couplage, pourvu d'au moins deux électrodes de décharge électrique haute tension au foyer interne de l'ellipsoïde tronqué.

Grâce à l'invention, on résout le problème technique énoncé précédemment.

En particulier, l'invention permet de supprimer le dégazage conventionnel par l'emploi d'une mise sous vide du liquide de couplage, ainsi que d'un dispositif de mise en recirculation du liquide de couplage, ce qui représente une réduction importante d'encombrement et de coût.

L'invention permet d'obtenir des niveaux de pression des ondes de pression plus importants qu'un dégazage physique conventionnel.

L'invention empêche le liquide de couplage de se regazer au cours du temps, ce qui se produit lorsqu'on atteint des taux de gaz dissous, en particulier d'oxygène, très bas, ce qui est obtenu grâce à l'invention, ce qui constitue un résultat particulièrement inattendu.

La présente invention sera maintenant décrite plus en détail en référence à la figure unique annexée représentant les valeurs de pression obtenues sur un générateur d'ondes de pression comprenant un ellipsoïde tronqué, par décharge électrique entre deux électrodes émettant une décharge électrique par intermittence au foyer interne dudit générateur, en fonction de la concentration en substance chimique avide de gaz, exprimée en moles par litre.

Les valeurs de pression sont données de façon adimensionnelles par rapport au niveau de pression servant de référence, obtenu par un dégazage physique conventionnel tel que décrit dans US-A-4 530 358, et symbolisé par la ligne horizontale, donc de valeur 1,0.

Par ailleurs, sur la figure annexée, on a représenté deux courbes de pression obtenues par un dégazage chimique selon la présente invention, soit avec de l'eau du robinet non dégazée (courbe *...*...*), soit avec de l'eau du robinet préalablement dégazée par un moyen physique conventionnel, noté eau pré-dégazée (courbe +---+---+, en fonction de la concentration en substance chimique de dégazage selon l'invention, par exemple du bisulfite de sodium, exprimée en moles par litre.

On observe que, pour obtenir un maximum de pression, la concentration de bisulfite de sodium est dépendante du type d'eau et que, si l'eau est préalablement dégazée, la concentration nécessaire en substance chimique est inférieure.

Pour obtenir des valeurs de pression supérieures à celles qui sont obtenues par dégazage physique pour de l'eau du robinet, il faut une concentration minimum de 14.10⁻⁴ mol/l, alors que l'on obteint cet effet pour de l'eau pré-dégazée dès qu'on ajoute du bisulfite de sodium.

Les courbes représentées à la figure annexée démontrent donc que l'invention permet d'obtenir des valeurs de pression supérieures à la pression que l'on obtient avec un dégazage physique conventionnel, ce qui démontre l'efficacité de ce mode de dégazage. En outre, le fait d'avoir un dégazage physique préalable ne permet pas d'obtenir des niveaux de pression supérieurs à ceux obtenus avec de l'eau non dégazée physiquement, ce qui implique que la présente invention permet d'envisager de supprimer tout moyen physique de dégazage sans perte de performance, ce qui constitue un avantage particulièrement inattendu de l'invention.

Naturellement, la substance chimique avide de gaz, en particulier l'oxygène selon l'invention, doit être soluble dans le liquide de couplage utilisé. Il en résulte que si le liquide de couplage est une solution aqueuse cette substance chimique est hydrosoluble et si le liquide de couplage est une huile cette substance chimique sera oléosoluble.

## Revendications

1. Procédé de dégazage d'un liquide de couplage présent dans un appareil de génération d'ondes de pression à liquide de couplage, caractérisé en ce qu'il comprend l'addition, audit liquide de couplage, d'au moins une substance chimique avide de gaz, en une quantité suffisante pour absorber sensiblement complètement ledit gaz.

2. Procédé selon la revendication 1, caractérisé en ce qu'on réalise une désoxygénation du liquide de couplage précité, la substance chimique précitée est une substance chimique avide d'oxygène, de manière à éliminer sensiblement complètement l'oxygène contenu dans ledit liquide.

3. Procédé selon la revendication 1 ou 2, caractérisé en ce que la substance chimique précitée comprend un sulfite, en particulier un sulfite de métal alcalin ou alcalino-terreux.

4. Procédé selon la revendication 3, caractérisé en ce que le sulfite précité est un bisulfite de sodium ou de potassium.

5. Procédé selon l'une des revendications 1 à 4, caractérisé en ce que le liquide de couplage est constitué par une solution aqueuse, par exemple de l'eau.

6. Procédé selon l'une des revendications 1 à 5, caractérisé en ce que la concentration en substance chimique précitée avide de gaz est comprise entre 5 x 10⁻⁴ et 100 x 10⁻⁴ mol/l.

7. Utilisation d'un liquide de couplage dans un appareil de génération d'ondes de pression à liquide de couplage, pour la transmission d'ondes de pression, caractérisée en ce que ledit liquide de couplage comprend au moins une substance chimique avide de gaz en une quantité efficace pour absorber sensiblement complètement un gaz présent ou généré dans ledit liquide.

8. Utilisation selon la revendication 7, caractérisée en ce que la substance chimique précitée est telle que définie à l'une quelconque des revendications 2 à 6.

9. Générateur d'ondes de pression à liquide de couplage, caractérisé en ce que ledit liquide de couplage est dégazé par le procédé selon l'une quelconque des revendications 1 à 6.

10. Générateur d'ondes de pression selon la revendication 9, caractérisé en ce que le liquide de couplage est constitué par une solution aqueuse ou de l'eau.

11. Générateur d'ondes de pression selon la revendication 9 ou 10, caractérisé en ce qu'il comprend un ellipsoïde tronqué et rempli dudit liquide de couplage et pourvu d'au moins deux électrodes de décharge électrique haute tension au foyer interne dudit ellipsoïde tronqué.

## Claims

1. Process for degassing a coupling liquid present in a pressure wave generating apparatus employing coupling liquid, the process being characterized in that it comprises the addition to said coupling liquid of at least one chemical substance which readily takes up gas, in a sufficient quantity to absorb said gas substantially completely.

2. Process according to claim 1, wherein deoxygenation of said coupling liquid is effected, said chemical substance being a chemical substance which readily takes up oxygen so as to eliminate the oxygen contained in said liquid substantially completely.

3. Process according to claim 1 or 2, wherein said chemical substance comprises a sulfite, particularly a sulfite of alkaline- or alkaline-earth metal.

4. Process according to claim 3, wherein said sulfite is a sodium or potassium bisulfite.

5. Process according to one of claims 1 to 4, wherein the coupling liquid is constituted by an aqueous solution, for example, water.

6. Process according to one of claims 1 to 5, wherein the concentration of said gas-absorbing chemical substance is comprised between 5.10⁻⁴ and 100.10⁻⁴ mol/l.

7. Use of a coupling liquid in a pressure wave generating apparatus employing coupling liquid, for transmitting pressure waves, wherein said coupling liquid comprises at least one chemical substance which readily takes up gas in an efficient quantity to absorb a gas present or generated in said liquid, substantially completely.

8. Use according to claim 7, wherein said chemical substance is as defined in any one of claims 2 to 6.

9. Pressure wave generator employing coupling liquid, wherein said coupling liquid is degassed by the process according to any one of claims 1 to 6.

10. Pressure wave generator according to claim 9, wherein the coupling liquid is constituted by an aqueous solution or water.

11. Pressure wave generator according to claim 9 or 10, wherein it comprises a truncated ellipsoid filled with said coupling liquid, and provided with at least two high voltage electric discharge electrodes at the inner focus of said truncated ellipsoid.

## Patentansprüche

1. Verfahren zur Entgasung einer Kupplungsflüssigkeit, die in einer Druckwellen-Generatorvorrichtung mittels Kupplungsflüssigkeiten vorliegt, dadurch gekennzeichnet, daß es den Zusatz, zur Kupplungsflüssigkeit, zumindest einer gasanziehenden chemischen Substanz in einer ausreichenden Menge, um das Gas im wesentlichen vollständig zu absorbieren, umfaßt.

2. Verfahren nach Anspruch 1, dadurch gekennzeichnet, daß eine Desoxygenierung der Kupplungsflüssigkeit durchgeführt wird, wobei die chemische Substanz eine sauerstoffanziehende chemische Substanz ist, um den in der Flüssigkeit enthaltenen Sauerstoff im wesentlichen vollständig zu eliminieren.

3. Verfahren nach Anspruch 1 oder 2, dadurch gekennzeichnet, daß die chemische Substanz ein Sulfit, insbesondere Alkalimetall- oder Erdalkalimetallsulfit, umfaßt.

4. Verfahren nach Anspruch 3, dadurch gekennzeichnet, daß das Sulfit Natrium- oder Kaliumbisulfit ist.

5. Verfahren nach einem der Ansprüche 1 bis 4, dadurch gekennzeichnet, daß die Kupplungsflüssigkeit aus einer wässerigen Lösung, beispielsweise Wasser, besteht.

6. Verfahren nach einem der Ansprüche 1 bis 5, dadurch gekennzeichnet, daß die Konzentration der gasanziehenden chemischen Substanz zwischen 5 x 10⁻⁴ und 100 x 10⁻⁴ mol/l liegt.

7. Verwendung einer Kupplungsflüssigkeit in einer Druckwellen-Generatorvorrichtung mittels Kupplungsflüssigkeiten zur Übertragung von Druckwellen, dadurch gekennzeichnet, daß die Kupplungsflüssigkeit zumindest eine gasanziehende chemische Substanz in einer wirksamen Menge, um das in der Flüssigkeit vorliegende oder erzeugte Gas im wesentlichen vollständig zu absorbieren, umfaßt.

8. Verwendung nach Anspruch 7, dadurch gekennzeichnet, daß die chemische Substanz wie in einem der Ansprüche 2 bis 6 definiert ist.

9. Druckwellen-Generator mittels Kupplungsflüssigkeiten, dadurch gekennzeichnet, daß die Kupplungsflüssigkeit durch das Verfahren nach einem der Ansprüche 1 bis 6 entgast wird.

10. Druckwellen-Generator nach Anspruch 9, dadurch gekennzeichnet, daß die Kupplungsflüssigkeit auf einer wässerigen Lösung oder Wasser besteht.

11. Druckwellen-Generator nach Anspruch 9 oder 10, dadurch gekennzeichnet, daß er ein abgeschnittenes und mit der Kupplungsflüssigkeit gefülltes Ellipsoid umfaßt und mit zumindest zwei Elektroden zur elektrischen Entladung mit hoher Spannung im inneren Brennpunkt des abgeschnittenen Ellipsoids versehen ist.
